# EUROPEAN PATENT SPECIFICATION

(11) **EP 3 407 824 B1**
(45) Date of publication and mention of the grant of the patent: **15.04.2020**
(21) Application number: 17702744.8
(22) Date of filing: 23.01.2017
(51) Int. Cl.: A61C 7/14, A61C 7/16, A61C 7/20

(54) **LINGUAL ORTHODONTIC APPLIANCE**
LINGUALE ORTHODONTISCHE VORRICHTUNG
APPAREIL ORTHODONTIQUE LINGUAL

(30) Priority: 29.01.2016 EP 16153280
(43) Date of publication of application: 05.12.2018
(73) Proprietor: 3M Innovative Properties Company, St. Paul, MN 55133-3427 (US)
(72) Inventor: PAEHL, Ralf, 41453 Neuss (DE); SCHULHOF, Adam, Oradell New Jersey 07649 (US)
(74) Representative: Bergen, Katja
(86) International application number: PCT/US2017/014498
(87) International publication number: WO 2017/132079

(56) References cited:
- WO-A1-02/064052
- WO-A1-2015/063897
- US-A1- 2004 086 825

## Description

### Field of the Invention

The invention relates to a lingual orthodontic appliance which comprises an archwire and a lingual anterior tooth bracket with a horizontal slot engaging a rectangular, ribbonwise curved archwire.

### Background Art

Orthodontic brackets are used in orthodontic treatments for moving teeth from an initial position to a desired position in a patient's dentition. The initial position typically refers to a position at the beginning of an orthodontic treatment, for example a position in which the labial faces of the teeth are misaligned to each other, whereas in the desired position the labial faces of the same teeth may be generally aligned.

For example, the patient's teeth may be aligned relative to each other to provide the dentition with a more aesthetically pleasant appearance. Further, one or more teeth may be moved within the dentition to compensate for a malocclusion. Such a movement of a tooth or teeth can be typically achieved by using brackets attached to the teeth. The brackets are typically connected to an elastic archwire for applying forces that urge the teeth toward desired positions over a longer term. Several brackets connected to the archwire are typically referred to as orthodontic appliance in the field of orthodontics.

Often orthodontic brackets are off-the-shelf products which are configured for use with clinical situations of different patients. Further there are customized orthodontic brackets which are typically made to fit with an individual clinical situation of one particular patient.

For example US 2012/0015315 A1 (Wiechmann et al.) discloses a customized orthodontic bracket system which includes a bracket having a customized bracket bonding pad for bonding the bracket to a tooth of a patient and a bracket slot adapted to receive a customized archwire. The customized archwire is adapted to be positioned in the bracket slot to form a precise bracket slot-archwire interface.

WO 2015/063897 A1 discloses a lingual orthodontic appliance with lateral support structures immediately adjacent a slot bottom surface.

There is a general desire for an orthodontic appliance that it can be easily mounted to a patient's teeth. This is to avoid errors, inaccuracies and additional costs during mounting of the appliance and to maximize patient comfort. On the other hand, there is a desire that the orthodontic appliance be capable of controlling the movement of each tooth in three dimensions including twisting about three axes. In orthodontics the three dimensions are typically based on a three-dimensional Cartesian coordinate system individually defined for each tooth. Further, the dimensions of the twisting about the axes are typically referred to as "torque", "rotation" and "tip". Typically the term "torque" refers to a twisting of the tooth about the mesial-distal axis, which is defined in a dimension tangential of a neutral line along which the dental arch extends. The term "rotation" typically refers to twisting about the tooth axis (or coronal-apical axis), which is defined in a dimension between the root and the occlusal or incisal side of the tooth. The tooth axis is typically or is desired to be approximately vertical according to a parallel to the anatomical vertical body axis. Further, the term "tip" typically refers to a twisting the tooth about the vestibular-lingual axis, which is defined in a dimension between the cheek or mouth and the tongue. The tooth axis, the mesial-distal axis and the vestibular-lingual axis typically meet in approximately a center of the tooth.

Although a variety of different brackets and bracket systems are on the market there is still a desire to provide a bracket system which is maximized with respect to its capability of controlling the movement in different dimensions and orientations.

### Summary of the Invention

The invention relates to a lingual orthodontic appliance which comprises a lingual bracket for an anterior tooth and an archwire. The orthodontic appliance can be defined in a (virtual) three-dimensional Cartesian coordinate system. Based thereon, the archwire extends in a first and a second dimension of the coordinate system at a general U-shape. This means that a projection of the archwire on a plane in the first and second dimension corresponds to a general U-shape.

In the third dimension the archwire is generally flat or planar. This means that the archwire may not be exactly flat or planar, but may have slight deviations from that flat or plane to account for individual clinical situations in a patient's mouth.

The archwire has a rectangular cross-section. The rectangular cross-section has a height which is defined by the longer side of the rectangular cross-section. (Accordingly, the rectangular cross-section further has a width defined by the shorter side of the cross-section.) The height is oriented along the third dimension. The orientation of an archwire having a rectangular cross-section which longer dimension extends generally parallel to the vestibular sides of a patient's teeth is in accordance to the terminology used in the field of orthodontics also referred to as "ribbonwise" herein.

The bracket has a bracket pad and a bracket body. The bracket body forms a slot for receiving the archwire. The slot is formed by at least two opposing parallel slot side faces and a slot ground face arranged perpendicular thereto. The slot further has a width defined by the distance between the slot side faces. The width matches with or corresponds to the height of the archwire.

The parallel slot side faces preferably define a slot insertion axis. In particular the slot insertion axis is parallel to the slot side faces and extends perpendicular to the slot ground face. The slot insertion axis is preferably horizontal with respect to the third dimension being aligned vertically.

In one embodiment the bracket and the archwire are mounted or arranged relative to each other such that the slot side faces are generally parallel to a plane in the first and second dimension. Such plane is typically arranged substantially parallel to the occlusal or horizontal plane of a patient's dentition when the orthodontic appliance is used for an orthodontic treatment in the patient's mouth. Accordingly, an orientation of a bracket's slot generally parallel to occlusal plane of a patient's dentition when the bracket is appropriately installed on the patient's tooth is in accordance to the terminology used in the field of orthodontics also referred to as "horizontal" herein.

In an embodiment the lingual orthodontic appliance has plurality of brackets for anterior teeth and a plurality of brackets for posterior teeth. The anterior teeth in a jaw of the patient's dentition typically comprise the incisors and may further comprise one or both of the canines, whereas the posterior teeth refer to the molars. Preferably the width of each slot matches with the height of the archwire. Accordingly, the lingual orthodontic appliance preferably has a plurality of brackets each having a horizontal slot. Further, the lingual orthodontic appliance preferably has a plurality of brackets for anterior teeth each having a horizontal slot. This is in contrast to prior art orthodontic appliances having brackets with a vertical slot for treating the anterior teeth. Although lingual brackets with a vertical slot typically provide for a more effective torque control it has been found that lingual brackets having a horizontal slot can provide for sufficient torque control. As an advantage, however, lingual brackets having a horizontal slot additionally provide for a maximized tip control.

It is noted that the brackets of the orthodontic appliance may be used with further (different) archwires at the beginning of an orthodontic treatment. Such archwires may have a circular or oval cross-section or may have a square-shaped or rectangular cross-section which are undersized with respect to the width of the slot. Such archwires are typically used to begin the orthodontic treatment with the archwire exerting moderate forces to the patient's teeth to align large malpositions of teeth prior to a treatment for the final tooth alignment. This further helps making the orthodontic treatment acceptable for the patient, because the exertion of high forces to teeth during an orthodontic treatment is typically inconvenient.

The term "torque" for the purpose of the present specification refers to twisting the tooth about the mesial-distal tooth axis or an axis parallel to the mesial-distal tooth axis. Further, the term "rotation" for the purpose of the present specification refers to a twisting about the tooth axis (or coronal-apical tooth axis) or an axis parallel to the tooth axis. And furthermore, the term "tip" for the purpose of the present specification refers to a twisting about the vestibular-lingual tooth axis or an axis parallel to the vestibular-lingual axis.

In a further embodiment the plurality of brackets are mounted such that each bracket is fitted with the slot to the archwire. In this embodiment the bracket are oriented with the pads forming an outer periphery of the orthodontic appliance.

In a further embodiment the lingual orthodontic appliance has a plurality of ligatures for retaining the archwire and the bracket with each other. Preferably, each bracket has a ligature for retaining the archwire and the bracket with each other. The ligature is preferably formed by a resilient band or ring, for example a rubber or silicon ring. Further, each bracket may have at least one tie wing for spanning the ligature over the portion of the bracket in which the slot is arranged. The bracket may further have two or more tie wings or one or more tie wings and hooks in combination.

The bracket has at least one archwire support structure. The archwire support structure forms a support surface in a plane of the slot ground face. Further, support surface is spaced from the slot ground face. Thus, the support surface provide for an additional leverage in case the archwire exerts a rotational load in a plane parallel to the slot side faces. In this situation the rotational load is limited by the force at which the archwire is retained in the slot by the ligature. Due to the maximized leverage provided by the support structure the rotation transmittable between the archwire and the bracket is maximized with respect to a bracket having no support structure, although the force exerted by the ligature is the same.

In a further embodiment the shape of the support surface is pre-determined independent from the shape of the bracket pad. Accordingly, the quality of the support provided by the support surface to the archwire under load is independent from any patient individual clinical situation. This maximizes the predictability of the rotation control provided by the bracket of the invention.

In an embodiment the archwire support structure forms a flat which forms the support surface. Further, the archwire support structure preferably protrudes generally parallel to the third dimension. Preferably the archwire support structure protrudes in a direction from the root of a tooth toward the apex of the tooth during use of the orthodontic appliance for treating a patient. The archwire support structure may protrude from the bracket body. The lingual orthodontic appliance may have two archwire support structures. These archwire support structures may be arranged symmetrically on opposite sides of the slot.

In a further embodiment the bracket pad has a tooth facing surface and an opposite tissue facing surface. The tooth facing surface and the tissue facing surface are substantially parallel to each other, but may taper toward each other at the periphery of the bracket pad. The tooth facing surface preferably conforms in shape to the shape of the lingual side of a patient's tooth. Hence, the bracket pad and the tooth facing surface is preferably customized to match with the shape of a tooth of an individual patient.

In a further embodiment the brackets of the lingual orthodontic appliance are made of a metal, in particular gold or steel or other appropriate metals or metal alloys.

In an embodiment the slot insertion axis extends generally perpendicular to the tooth axis, when seated on a tooth having a tooth axis.

In a further embodiment the slot ground face is oriented at an acute angle relative to an occlusal region of the tissue facing surface of the bracket pad.

### Brief Description of the Figures

Fig. 1 is a perspective view of a computer model of a bracket pad of a bracket according to an embodiment of the invention;
Fig. 2 is a perspective view of a computer model of a bracket body of a bracket according to an embodiment of the invention;
Fig. 3 is a perspective view of a computer model of a bracket according to an embodiment of the invention; and
Fig. 4 is perspective view of an orthodontic appliance according to an embodiment of the invention.

### Detailed Description of the Invention

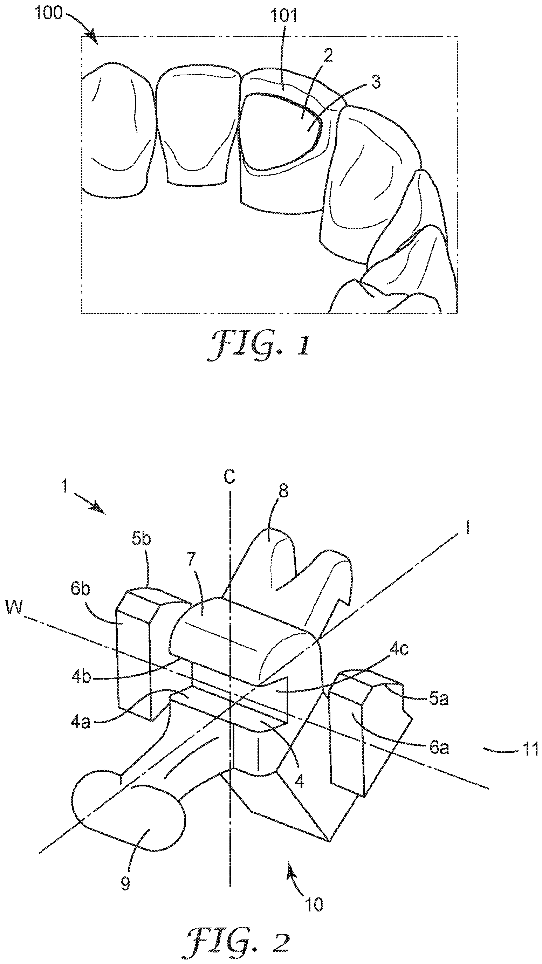

Fig. 1 illustrates a portion of a computer model of a patient's dentition 100. A bracket pad 2 is arranged on a tooth 101 of the patient's dentition 100. The dentition model 100 can be scanned directly from a patient's mouth or from a physical model of the patient's teeth. Such physical model is typically prepared from making a dental impression replicating the negative shape of the patient's teeth, and casting a positive plaster model by using the dental impression as a mold. In the example the dentition model 100 represents the malocclusion of the patient's teeth. A physical model may further be provided by 3D printing based on a computer model obtained by scanning.

The bracket pad 2 has a tissue facing surface 3, which in the example is a tongue facing surface. This is because the bracket pad is arranged on the lingual side of the tooth 101. The bracket pad 2 further has a tooth facing surface (not visible in this view) on the opposite side of the tissue facing surface. The tooth facing surface conforms in shape to the shape of the lingual side of the tooth 101. Further, because in the example the tissue facing surface is derived from the tooth facing surface or the lingual side of the tooth, the tissue facing surface also generally conforms in shape to the shape of the lingual side of the tooth 101. Therefore the bracket pad has a generally uniform thickness, although the bracket pad may be modified in a subsequent step to provide a periphery of the bracket pad with a tapered and/or rounded shape.

Fig. 2 shows an exemplary computer model of a bracket body 1. Although a computer model of the bracket body is illustrated, it is further referred to simply a "bracket body" in the following. The bracket body 1 can be obtained from a library which is accessible by the computer that stores the bracket body 1. The bracket body 1 may be otherwise generated and coupled with the bracket 2. The bracket body 1 has a slot 4 for receiving an orthodontic archwire (not shown). The slot 4 extends through the bracket body 1 along an archwire axis W. The slot 4 has a proximal slot side face 4a and an opposing distal side face 4b. The proximal and distal side face 4a, 4b extend parallel to the archwire axis W and further parallel to an archwire insertion axis I. The archwire axis W and the archwire insertion axis I are perpendicular to each other. The slot 4 has further a slot ground face 4c that extends parallel to the archwire axis W and further parallel to a slot cross axis C. The slot cross axis C is perpendicular to the archwire axis W as well as to the archwire insertion axis I.

The bracket body 1 further has two archwire support structures 5a, 5b. Each of the archwire support structures 5a, 5b forms a flat 6a, 6b. The flats 6a, 6b are within an (imaginary) plane of or flush with the slot ground face 4c. Further, the flats 6a, 6b each are spaced from the slot ground face 4c. The bracket body 1 has a head portion 7 which in the example has a tie wing 8 and a hook 9 which on the final bracket serve for retaining a ligature. The bracket body 1 has a first end portion 10 and, opposite thereof, a second end portion 11. The first end portion 10 is pre-shaped and in the example has the slot 4, the support structures 5a, 5b, the tie wing 8 and the hook 9. Further, the second end 11 portion extends at a generally uniform cross-section, in the example rectangular. The bracket body 1 is a precursor of the finally shaped bracket body with respect to the length of the second end portion 11. The second end portion 11 is typically shortened in a subsequent step of the bracket design. It is noted that the model of the bracket body 1 may further be a precursor with respect to the first end portion in that the initial presence and/or angulation of the slot 4 is optional. Further, the slot 4 and the support structures 5a, 5b may be adjustable in their angle relative to a dimension in which the second end portion extends. Although in the example the second end portion 11 extends along the slot insertion axis I, in another example the slot insertion axis I may extend at an angle to the dimension along which the second end portion extends. The end portion 11 may extend along the slot insertion axis I, or may extend at an angle to the slot insertion axis I.

The wire support structures 5a, 5b are arranged at a pre-determined distance from the slot 4, in particular from the slot ground face 4c. Thus, a bracket obtained from this design allows for a predictable rotation control of a tooth in a patient's mouth. Further, the space between the wire support structures 5a, 5b and the slot ground face 4c is preferably dimensioned so that a portion of a ligature can run through without getting compressed or clamped.

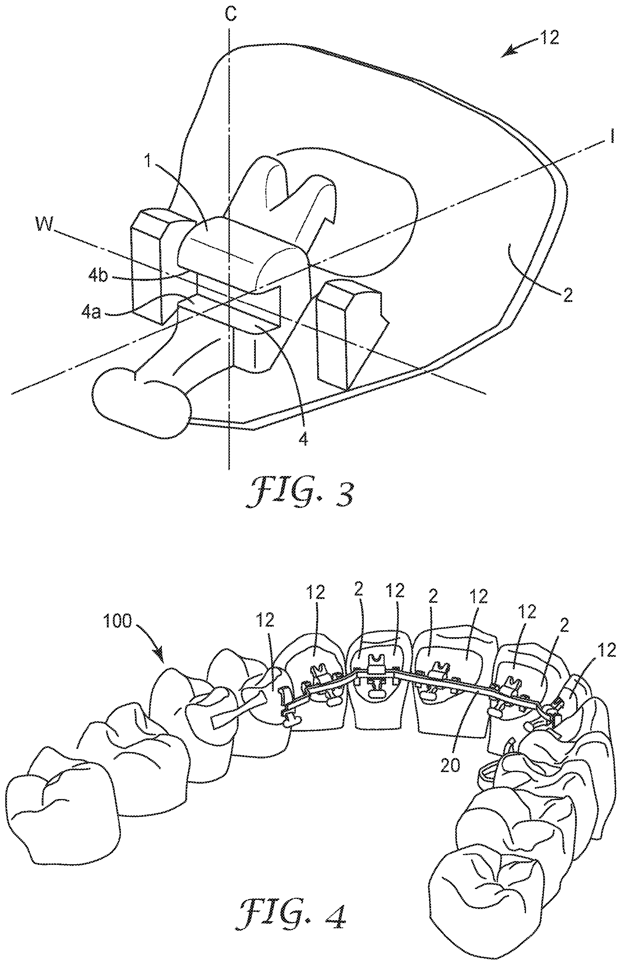

Fig. 3 shows a computer model of a bracket 12 which is obtained by combination of the bracket pad 2 (shown in Fig. 1) and the bracket body 1 (shown in Fig. 2). The combination is typically performed by aid of a computer. Thereby the patient's dentition is typically used to determine the path along which the archwire of the orthodontic appliance should extend, and the path of the archwire is used to align the bracket body 1. Typically, the second end portion of the bracket body 1 is shortened to avoid that it protrudes beyond the tooth facing surface of the bracket pad 2.

The slot insertion axis I extends generally perpendicular to the tooth axis (not shown). This type of slot, because of the orientation relative to the tooth, is typically referred to as "horizontal slot" in the field of orthodontics. The horizontal slot as shown features a slot ground face 4c oriented at an acute angle relative to the occlusal tissue facing surface 3 of the bracket pad 2. Likewise, the horizontal slot 4 as shown features a slot side face 4a oriented at an acute angle relative to the gingival portion of tissue facing surface 3 of the bracket pad 2 (the orientation angle is generally obtuse relative to the occlusal tissue facing surface). An orientation of the slot 4 as shown enables for effectively exerting a torque to the tooth in a plane parallel to dimensions of the slot cross axis and the slot insertion axis. This is because the two opposing slot side faces 4a, 4b allow for tightly clamping a rectangular wire by a positive fit so that therefore the archwire can transmit a torsional moment to the bracket 12 for rotating the tooth as desired. In an orthodontic treatment of anterior teeth it is typically desired that the brackets used for the treatment not only provide for good torque control but also good rotation control. Although the horizontal arrangement of the slot is typically less efficient for rotation control (twisting about the tooth axis) it has been found that the rotation control can be performed at relatively low forces that can be provided by a bracket having a horizontal slot. On the other hand, due to the positive fit between the archwire and the bracket with respect to a torsional moment in a plane of the slot cross axis C and the archwire axis W the bracket with the horizontal slot provides for excellent tip control. Accordingly, the bracket according to the invention can be used for posterior teeth as well as for anterior teeth. Further, the bracket according to the invention provides for excellent tip control which is particularly relevant for the anterior teeth.

Fig. 4 shows a part of an orthodontic appliance comprising a plurality of lingual orthodontic brackets 12 arranged on the front teeth of a patient's dentition 100. The brackets 12 are customized on the respective tooth on which they are arranged. In particular, each bracket 12 has a bracket pad 2 which conforms in shape to the lingual side of the respective tooth. Although the brackets 12 are differently configured they all have a horizontal slot 4. Therefore the orthodontic appliance provides for good rotation, torque and tip control during an orthodontic treatment.

The orthodontic appliance further has an archwire 20 mounted in the slots of the brackets 12. Further, the orthodontic appliance typically has a plurality of ligatures fixed on the brackets 12 for retaining the archwire in the slots.

## Claims

1. A lingual orthodontic appliance comprising a lingual bracket for an anterior tooth (101) and an archwire (20), the orthodontic appliance being defined in a three-dimensional Cartesian coordinate system, wherein the archwire in a first and a second dimension of the coordinate system extends generally U-shaped and in the third dimension is generally flat, wherein the archwire has a rectangular cross-section having a height defined by the longer side of the rectangular cross-section, the height being oriented along the third dimension, wherein the bracket has a bracket pad (2) and a bracket body (1) with the bracket body forming a slot (4) for receiving the archwire, the slot being formed by at least two opposing parallel slot side faces (4a, 4b) defining a slot insertion axis (I) parallel to the slot side faces, and a slot ground face (4c) arranged perpendicular to the slot insertion axis, wherein the slot has a width defined by the distance between the slot side faces, and wherein the width corresponds to the height of the archwire, and wherein the slot insertion axis is horizontal with respect to the third dimension being aligned vertically, wherein the bracket has at least one archwire support structure (5a, 5b) that forms a support surface (6a, 6b) in a plane of the slot ground face, **characterised in that** the support surface is spaced from the slot ground face.

2. The lingual orthodontic appliance of claim 1, wherein the bracket and the archwire being arranged relative to each other such that the slot side faces are generally parallel to a plane in the first and second dimension.

3. The lingual orthodontic appliance of claim 1 or 2, having plurality of brackets for anterior teeth and a plurality of brackets for posterior teeth, wherein the width of each slot matches with the height of the archwire.

4. The lingual orthodontic appliance of claim 3, wherein the plurality of brackets being arranged relative to each other such that each bracket is fitted with the slot to the archwire and oriented with the pads forming an outer periphery of the orthodontic appliance.

5. The lingual orthodontic appliance of claim 3 or 4, having a plurality of ligatures for retaining the archwire and the bracket with each other.

6. The lingual orthodontic appliance of any of the preceding claims, wherein the shape of the support surface is pre-determined independent from the shape of the bracket pad.

7. The lingual orthodontic appliance of any of the preceding claims, wherein the archwire support structure preferably forms a flat and protrudes generally parallel to the third dimension.

8. The lingual orthodontic appliance of any of the preceding claims, wherein the archwire support structure protrudes from the bracket body.

9. The lingual orthodontic appliance of any of the preceding claims, having two archwire support structures symmetrically arranged on opposite sides of the slot.

10. The lingual orthodontic appliance of any of the preceding claims, wherein the bracket pad has a tooth facing surface and an opposite tissue facing surface, wherein the tooth facing surface and the tissue facing surface are substantially parallel to each other, tapering toward each other at the periphery of the bracket pad.

11. The lingual orthodontic appliance of any of the preceding claims, wherein the brackets are made of a metal, in particular gold or steel.

12. The lingual orthodontic appliance of any of the preceding claims, wherein, when seated on a tooth having a tooth axis, the slot insertion axis extends generally perpendicular to the tooth axis.

13. The lingual orthodontic appliance of claim 10, wherein the slot ground face is oriented at an acute angle relative to an occlusal region of the tissue facing surface of the bracket pad.

## Patentansprüche

1. Linguale kieferorthopädische Vorrichtung, umfassend ein linguales Bracket für einen Frontzahn (101) und einen Drahtbogen (20), wobei die kieferorthopädische Vorrichtung in einem dreidimensionalen kartesischen Koordinatensystem definiert ist, wobei sich der Drahtbogen in einer ersten und einer zweiten Dimension des Koordinatensystems im Allgemeinen U-förmig und in der dritten Dimension im Allgemeinen flach erstreckt, wobei der Drahtbogen einen rechteckigen Querschnitt mit einer Höhe aufweist, die durch die längere Seite des rechteckigen Querschnitts definiert ist, wobei die Höhe entlang der dritten Dimension orientiert ist, wobei das Bracket ein Bracket-Kissen (2) und einen Bracket-Körper (1) aufweist, wobei der Bracket-Körper einen Schlitz (4) zum Empfangen des Drahtbogens bildet, wobei der Schlitz durch mindestens zwei gegenüberliegende parallele Schlitzseitenflächen (4a, 4b), die eine Schlitzeinführachse (I) parallel zu den Schlitzseitenflächen definieren, und eine Schlitzgrundfläche (4c), die senkrecht zu der Schlitzeinführachse angeordnet ist, gebildet wird, wobei der Schlitz eine Breite aufweist, die durch den Abstand zwischen den Schlitzseitenflächen definiert ist, und wobei die Breite der Höhe des Drahtbogens entspricht, und wobei die Schlitzeinführachse horizontal in Bezug auf die dritte Dimension ist, die vertikal ausgerichtet ist, wobei das Bracket mindestens eine Drahtbogenträgerstruktur (5a, 5b) aufweist, die eine Trägeroberfläche (6a, 6b) in einer Ebene der Schlitzgrundfläche bildet, **dadurch gekennzeichnet, dass** die Trägeroberfläche von der Schlitzgrundfläche beabstandet ist.

2. Linguale kieferorthopädische Vorrichtung nach Anspruch 1, wobei das Bracket und der Drahtbogen in Bezug aufeinander auf derartige Weise angeordnet sind, dass die Schlitzseitenflächen in der ersten und der zweiten Dimension im Allgemeinen parallel zu einer Ebene sind.

3. Linguale kieferorthopädische Vorrichtung nach Anspruch 1 oder 2, die eine Vielzahl von Brackets für Frontzähne und eine Vielzahl von Brackets für Backenzähne aufweist, wobei die Breite von jedem Schlitz mit der Höhe des Drahtbogens übereinstimmt.

4. Linguale kieferorthopädische Vorrichtung nach Anspruch 3, wobei die Vielzahl von Brackets in Bezug aufeinander auf derartige Weise angeordnet sind, dass jedes Bracket mit dem Schlitz auf den Drahtbogen gepasst ist so ausgerichtet ist, dass die Kissen einen äußeren Umfang der kieferorthopädische Vorrichtung bilden.

5. Linguale kieferorthopädische Vorrichtung nach Anspruch 3 oder 4, die eine Vielzahl von Ligaturen zum Zusammenhalten des Drahtbogens und des Brackets aufweist.

6. Linguale kieferorthopädische Vorrichtung nach einem der vorstehenden Ansprüche, wobei die Form der Trägeroberfläche unabhängig von der Form des Bracket-Kissens vorbestimmt ist.

7. Linguale kieferorthopädische Vorrichtung nach einem der vorstehenden Ansprüche, wobei die Drahtbogenträgerstruktur vorzugsweise eine Ebene bildet und im Allgemeinen parallel zur dritten Dimension vorsteht.

8. Linguale kieferorthopädische Vorrichtung nach einem der vorstehenden Ansprüche, wobei die Drahtbogenträgerstruktur aus dem Bracket-Körper herausragt.

9. Linguale kieferorthopädische Vorrichtung nach einem der vorstehenden Ansprüche, die zwei Drahtbogenträgerstrukturen aufweist, die symmetrisch auf einander entgegengesetzten Seiten des Schlitzes angeordnet sind.

10. Linguale kieferorthopädische Vorrichtung nach einem der vorstehenden Ansprüche, wobei das Bracket-Kissen eine zum Zahn gewandte Oberfläche und eine entgegengesetzte, zum Gewebe gewandte Oberfläche aufweist, wobei die zum Zahn gewandte Oberfläche und die zum Gewebe gewandte Oberfläche im Wesentlichen parallel zueinander sind, die am Umfang des Bracket-Kissens aufeinander zulaufen.

11. Linguale kieferorthopädische Vorrichtung nach einem der vorstehenden Ansprüche, wobei die Brackets aus einem Metall, insbesondere aus Gold oder Stahl, hergestellt sind.

12. Linguale kieferorthopädische Vorrichtung nach einem der vorstehenden Ansprüche, wobei sich die Schlitzeinführachse im Allgemeinen senkrecht zu der Zahnachse erstreckt, wenn sie auf einem Zahn mit einer Zahnachse sitzt.

13. Linguale kieferorthopädische Vorrichtung nach Anspruch 10, wobei die Schlitzgrundfläche in einem spitzen Winkel in Bezug auf einen okklusalen Bereich der dem Gewebe zugewandten Oberfläche des Bracket-Kissens orientiert ist.

## Revendications

1. Appareil orthodontique lingual comprenant un bracket lingual pour une dent antérieure (101) et un arc dentaire (20), l'appareil orthodontique étant défini dans un système de coordonnées cartésiennes à trois dimensions, dans lequel l'arc dentaire dans une première et une deuxième dimension du système de coordonnées s'étend généralement en forme de U et dans la troisième dimension est généralement plat, dans lequel l'arc dentaire a une coupe transversale rectangulaire ayant une hauteur définie par le côté plus long de la coupe transversale rectangulaire, la hauteur étant orientée le long de la troisième dimension, dans lequel le bracket a un plot de bracket (2) et un corps de bracket (1) avec le corps de bracket formant une encoche (4) pour recevoir l'arc dentaire, l'encoche étant formée par au moins deux faces latérales d'encoche parallèles opposées (4a, 4b) définissant un axe d'insertion d'encoche (I) parallèle aux faces latérales d'encoche, et une face de base d'encoche (4c) agencée perpendiculaire à l'axe d'insertion d'encoche, dans lequel l'encoche a une largeur définie par la distance entre les faces latérales d'encoche, et dans lequel la largeur correspond à la hauteur de l'arc dentaire, et dans lequel l'axe d'insertion d'encoche est horizontal par rapport à la troisième dimension étant alignée verticalement, dans lequel le bracket a au moins une structure de support d'arc dentaire (5a, 5b) qui forme une surface de support (6a, 6b) dans un plan de la face de base d'encoche, **caractérisé en ce que** la surface de support est espacée de la face de base d'encoche.

2. Appareil orthodontique lingual selon la revendication 1, dans lequel le bracket et l'arc dentaire sont agencés l'un par rapport à l'autre de telle sorte que les faces latérales d'encoche sont généralement parallèles à un plan dans les première et deuxième dimensions.

3. Appareil orthodontique lingual selon la revendication 1 ou 2, ayant une pluralité de brackets pour dents antérieures et une pluralité de brackets pour dents postérieures, dans lequel la largeur de chaque encoche correspond à la hauteur de l'arc dentaire.

4. Appareil orthodontique lingual selon la revendication 3, dans lequel la pluralité de brackets est agencée les uns par rapport aux autres de telle sorte que chaque bracket est monté avec l'encoche à l'arc dentaire et orienté avec les plots formant une périphérie externe de l'appareil orthodontique.

5. Appareil orthodontique lingual selon la revendication 3 ou 4, ayant une pluralité de ligatures destinée à retenir l'arc dentaire et le bracket l'un avec l'autre.

6. Appareil orthodontique lingual selon l'une quelconque des revendications précédentes, dans lequel la forme de la surface de support est prédéterminée indépendamment de la forme du plot de bracket.

7. Appareil orthodontique lingual selon l'une quelconque des revendications précédentes, dans lequel la structure de support d'arc dentaire forme de préférence un plat et fait saillie généralement parallèle à la troisième dimension.

8. Appareil orthodontique lingual selon l'une quelconque des revendications précédentes, dans lequel la structure de support d'arc dentaire fait saillie du corps de bracket.

9. Appareil orthodontique lingual selon l'une quelconque des revendications précédentes, ayant deux structures de support d'arc dentaire agencées symétriquement sur des côtés opposés de l'encoche.

10. Appareil orthodontique lingual selon l'une quelconque des revendications précédentes, dans lequel le plot de bracket a une surface faisant face aux dents et une surface opposée faisant face au tissu, dans lequel la surface faisant face aux dents et la surface faisant face au tissu sont essentiellement parallèles l'une à l'autre, s'effilant l'une vers l'autre au niveau de la périphérie du plot de bracket.

11. Appareil orthodontique lingual selon l'une quelconque des revendications précédentes, dans lequel les brackets sont constitués d'un métal, en particulier d'or ou d'acier.

12. Appareil orthodontique lingual selon l'une quelconque des revendications précédentes, dans lequel, lorsqu'il est installé sur une dent ayant un axe de dent, l'axe d'insertion d'encoche s'étend généralement perpendiculaire à l'axe de dent.

13. Appareil orthodontique lingual selon la revendication 10, dans lequel la face de base d'encoche est orientée selon un angle aigu par rapport à une région occlusale de la surface faisant face au tissu du plot de bracket.
